# EUROPEAN PATENT SPECIFICATION

(11) **EP 3 296 077 B1**
(45) Date of publication and mention of the grant of the patent: **20.11.2019**
(21) Application number: 17001561.4
(22) Date of filing: 14.09.2017
(51) Int. Cl.: B29B 17/00, B29C 48/00, B29C 48/76, C08J 11/10

(54) **PROCESS FOR MAKING POLYMERIC COMPOUNDS FOR MIXTURES AIMED TO PRODUCE TECHNICAL RUBBER ITEMS**
VERFAHREN ZUR HERSTELLUNG VON POLYMERISCHEN VERBINDUNGEN FÜR MISCHUNGEN, DIE AUF DIE HERSTELLUNG VON GUMMIARTIKELN ABZIELEN
PROCÉDÉ DE FABRICATION DE COMPOSÉS POLYMÈRES POUR DES MÉLANGES VISANT À PRODUIRE DES ARTICLES EN CAOUTCHOUC

(30) Priority: 16.09.2016 IT 201600093249
(43) Date of publication of application: 21.03.2018
(73) Proprietor: AGR S.R.L., 10121 Torino (IT)
(72) Inventor: Scola, Davide, 10121 Torino (IT); Boulanger, Michele, 10121 Torino (IT)
(74) Representative: Garavelli, Paolo

(56) References cited:
- EP-A1- 1 572 429
- UPHUS R ET AL: "CONTINUOUS MIXING OF POWDER RUBBER ON THE TWIN SCREW EXTRUDER//KONTINUIERLICHES MISCHEN VON PULVERKAUTSCHUK AM DOPPELSCHNECKENEXTRUDER", KAUTSCHUK UND GUMMI - KUNSTSTOFFE, HUTHIG VERLAG, HEIDELBERG, DE, vol. 53, no. 5, 1 January 2000 (2000-01-01), pages 279-289, XP001179341, ISSN: 0948-3276
- STEHR R ET AL: "ZAHNRADPUMPEN IN DER KAUTSCHUK-PROFILEXTRUSION Ú1 3/4 . ÖGEAR PUMPS IN RUBBER PROFILE EXTRUSION", KAUTSCHUK UND GUMMI - KUNSTSTOFFE, HUTHIG VERLAG, HEIDELBERG, DE, vol. 49, no. 12, 1 December 1996 (1996-12-01), pages 816-820, XP000641929, ISSN: 0948-3276

## Description

The present invention refers to a process for making polymeric compounds and, more precisely, to a process for making polymeric compounds starting from used secondary raw materials coming from PFU, namely Out of use tires, gaskets made of EPDM (Ethylene-Propylene Diene Monomer) and butyl blisters.

The use of polymeric compounds for making items made of plastics or rubber is nowadays widely known. Typically, the so-called "compounding" of plastic materials is a continuous process with many phases for producing plastic formulations by mixing polymers and additives afterwards melted through extruders of the twin screw type.

Moreover, the increased economic and environmental pressures nowadays have introduced a change in the way in which society and industry look at plastic materials used in the various fields and in production. Depending on requirements requested for certain items and their applications, manufacturers and end users have now available a wide range of materials among which a shrewd choice can be made, depending on price/performances relationships and environmental credentials (for example, the contents of recycled material).

With these perspectives, polymeric compounds from secondary raw materials have been created, namely compounds of recycled materials which can be used for producing manufactured items with less sophisticated specifications, for which price is the priority. These compounds are manufactured starting from post-industry stock materials, such as for example industrial and/or post-consumption wastes, and typically have wider tolerances as regards the polymeric raw material.

The transformation of recovered materials into "secondary raw materials" occurs from the post-industrial recovery through highly specialized machinery in compliance with laws currently in force. From the differentiated recycling, different types of recovered manufactured products are obtained.

With this perspective, the present invention aims to provide a process for making polymeric compounds starting from secondary raw materials from PFU,out of use tires, EPDM (Ethylene-Propylene Diene Monomer) rubbers, and butyl blisters, supplied as shredded by using specific criteria for every product to be used in an extrusion process.

EP-A1-1 572 429 discloses a process for making polymeric compounds for mixtures aimed to produce technical rubber items, wherein said polymeric compounds are obtained starting from secondary raw materials chosen from the group comprising PFU, namely out of use tires, EPDM, and butyl rubbers, said process comprising the following steps:
- shredding the secondary raw materials with granulometry included between 2.5 and 7 mm, without including crumb;
- extruding with the following parameters: extruder head temperature included between 60 and 100 °C, number of screw revolutions included between 190 and 300, wherein the extruder pressure is obtained by using as extruder a co-rotating twin screw.

Therefore, object of the present invention is solving the above prior art problems, by providing a process for making polymeric compounds starting from secondary raw materials from PFU, from EPDM rubbers, and from butyl blisters, which process is an extrusion process with temperature, speed, torque, and pressure control, and obtaining the polymeric compounds made of regenerated PFU, or EPDM, or butyl rubber, whose final mechanical characteristics allow their use till over 50% in the basic mixtures for obtaining technical rubber items: in fact, it must be noted that the concentration of the usable polymeric compound is linked to the chemical-physical and mechanical characteristics required by the end manufactured product.

The above and other objects and advantages of the invention, as will result from the following description, are obtained with a process for making polymeric compounds starting from secondary raw materials as claimed in claim 1. Preferred embodiments and non-trivial variations of the present invention are the subject matter of the dependent claims.

It is intended that all enclosed claims are an integral part of the present description.

It will be immediately obvious that numerous variations and modifications can be made to what is described, without departing from the scope of the invention as appears from the enclosed claims.

The present invention will be better described by a preferred embodiment thereof, provided as a non-limiting example, with reference to the enclosed drawings, in which:

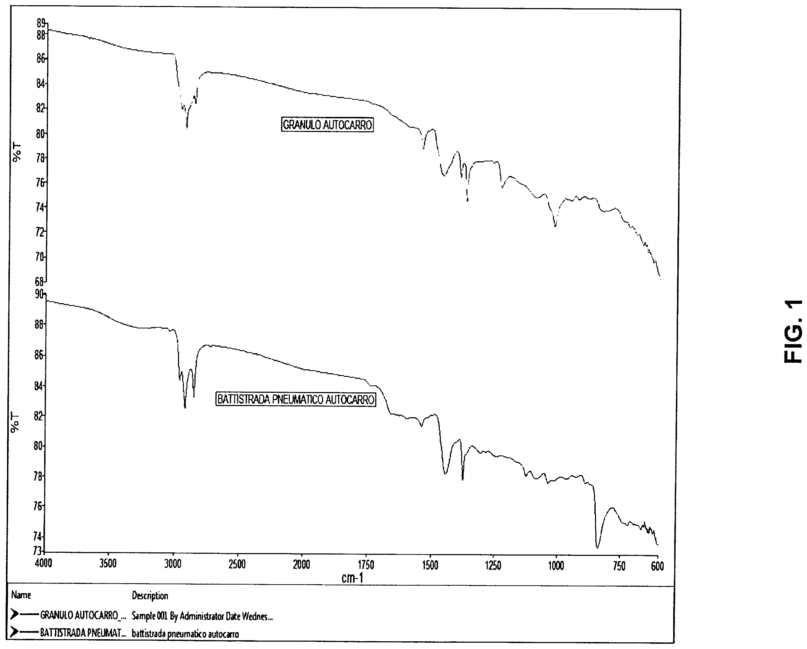

- Figure 1 shows the IR spectral comparison between granule and truck tread - ATR made of germanium;

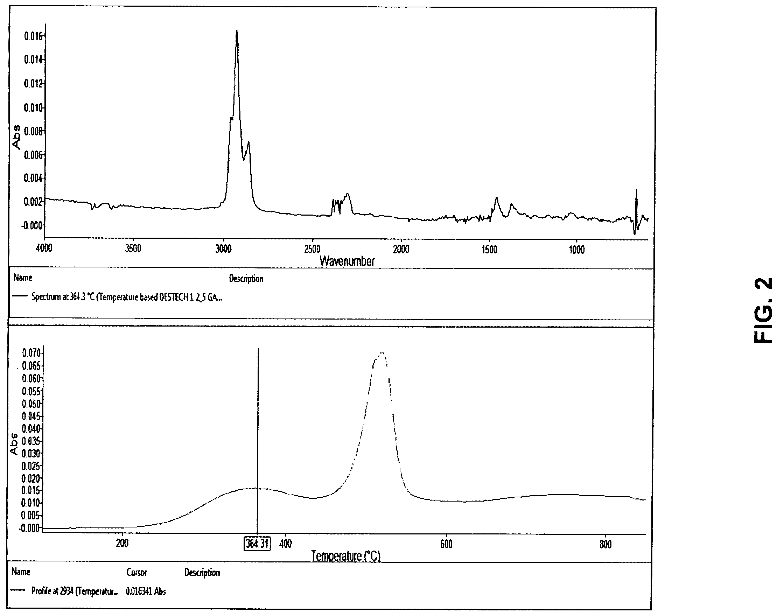

- Figure 2 shows the first loss of weight: volatile and semi-volatile TGA-IR with respect to an hydrocarbon oil extender;

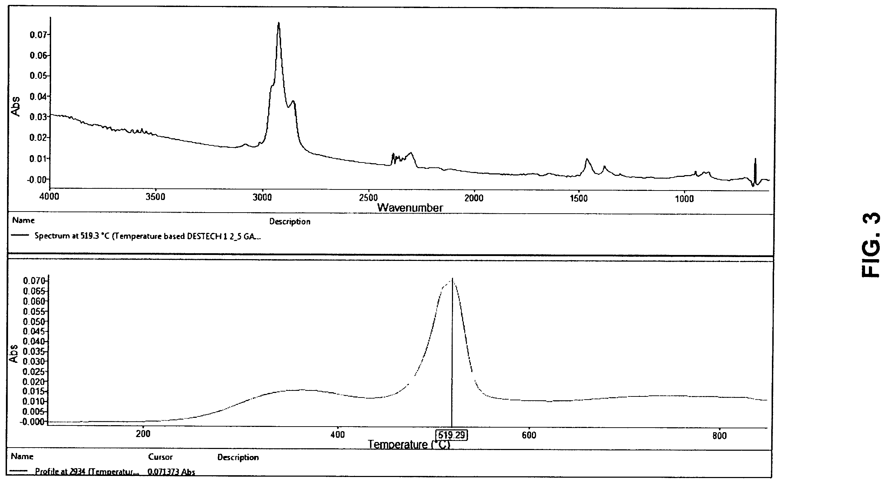

- Figure 3 shows the second loss of weight: TGA-IR decomposition of the polymer with respect to hydrocarbon fragments with medium-high molecular weight;

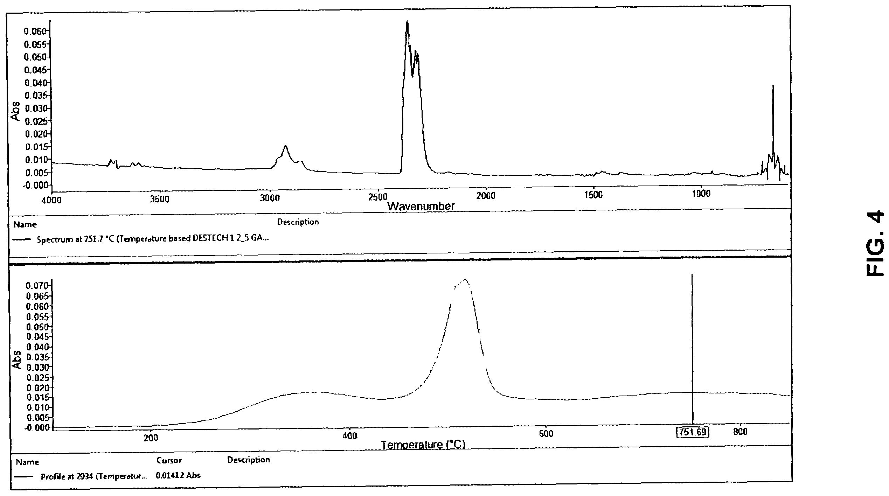

- Figure 4 shows the third loss of weight: TGA-IR CO2 from calcium carbonate;
- Figure 5 shows the measuring results of Mooney viscosity on an extruded PFU product;

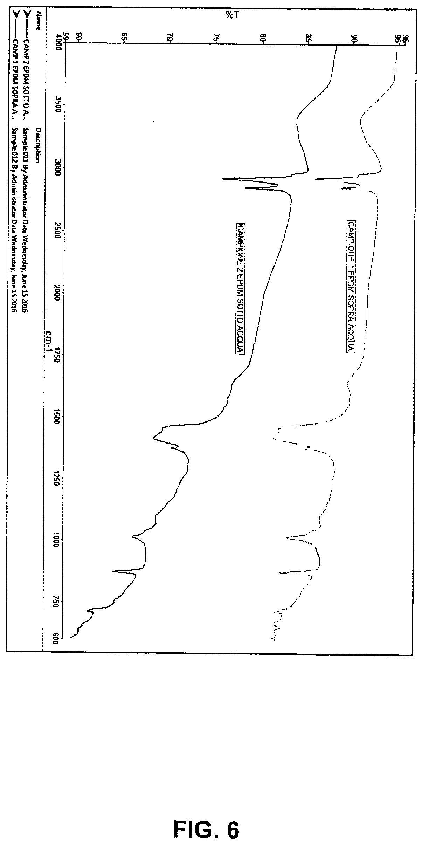

- Figure 6 shows the analysis of a sample of EPDM granulated at 2.5 mm;

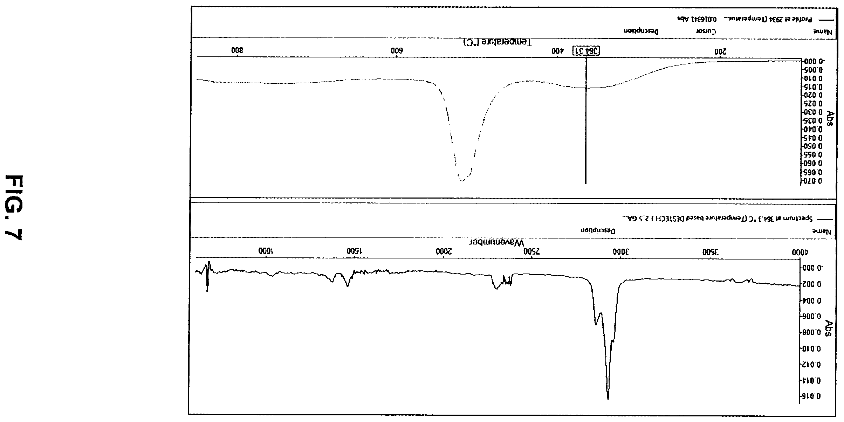

- Figure 7 shows the first loss of weight: volatile and semi-volatile TGA-IR with respect to an hydrocarbon oil extender;

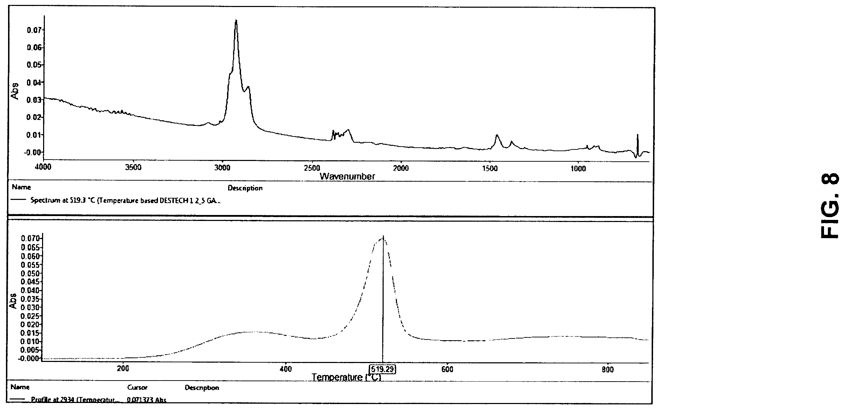

- Figure 8 shows the second loss of weight: TGA-IR decomposition of the polymer with respect to hydrocarbon fragments with medium-high molecular weight;

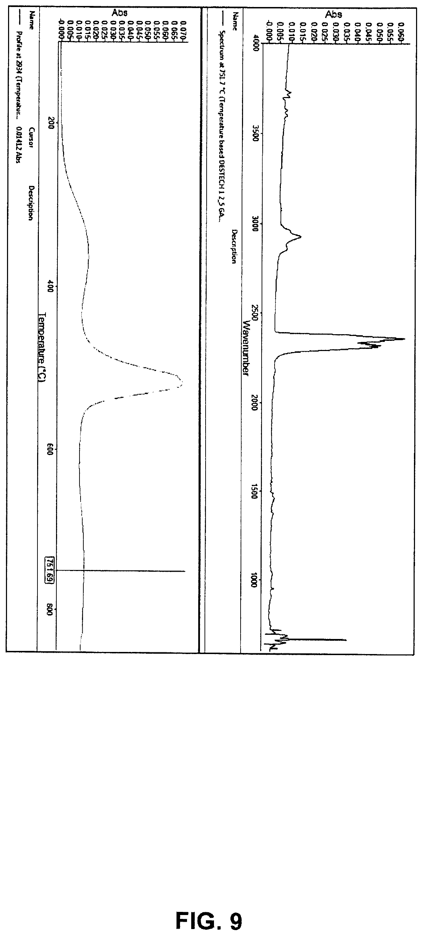

- Figure 9 shows the third loss of weight: CO2 from calcium carbonate;

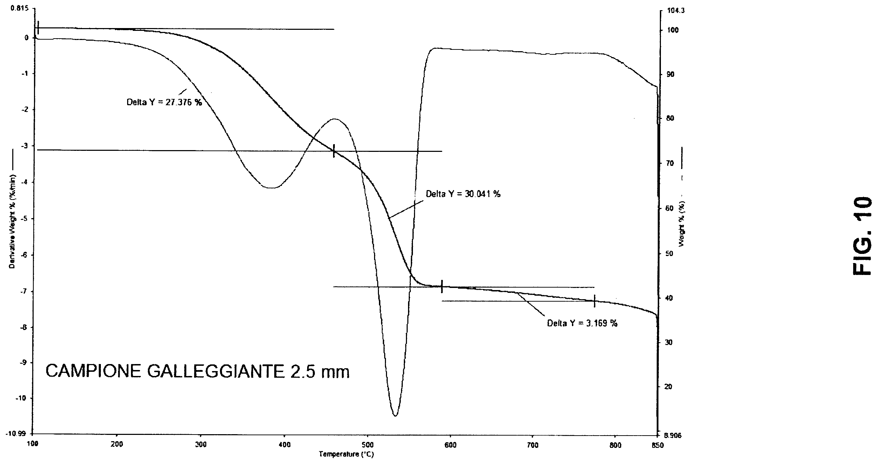

- Figure 10 shows the floating sample of low-density polymeric compound: TGA and TG-IR analyses: temperature-based analyses;

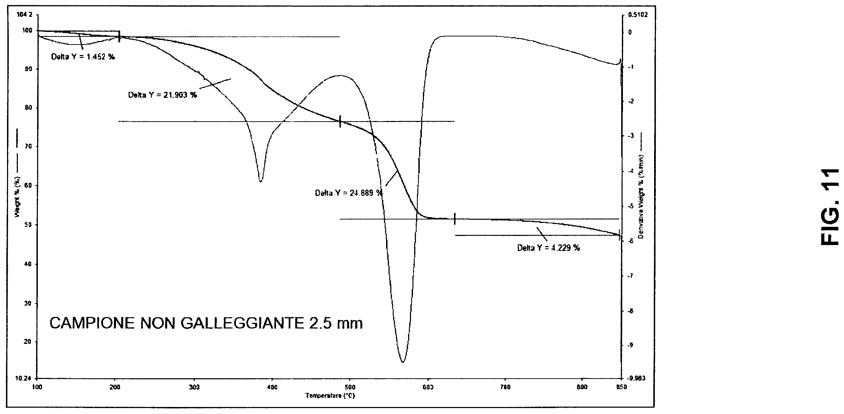

- Figure 11 shows a non-floating sample of high-density polymeric compound: TGA and TG-IR analyses: temperature-based analyses;

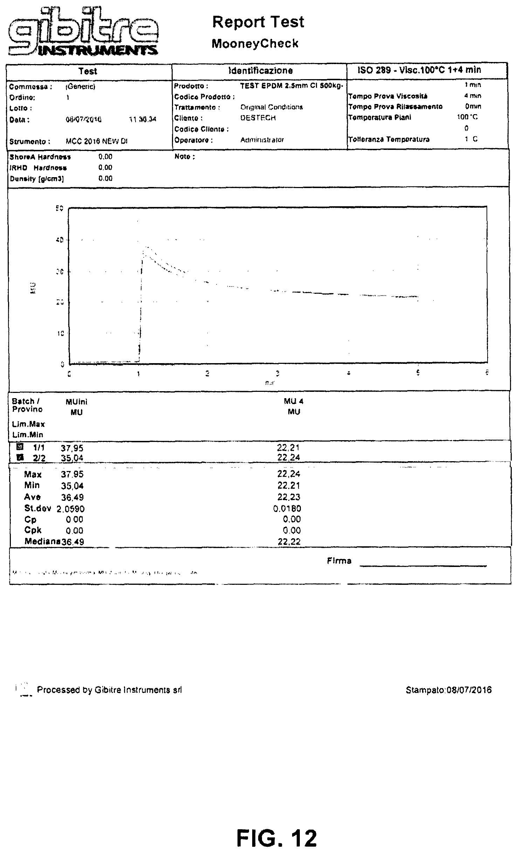

- Figure 12 shows the measure of the Mooney viscosity on this extruded material;
- Figure 13 shows the check of the thermal stability of an EPDM extruded product; and

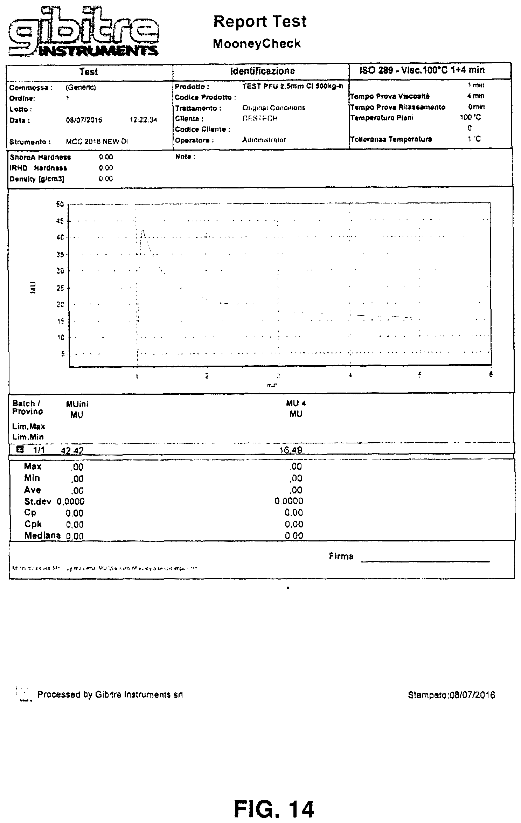

- Figure 14 shows the measure of the Mooney viscosity on a PFU extruded product.

A detailed description will now be made of a preferred embodiment of the process for making polymeric compounds starting from secondary raw materials of the present invention, provided as a non-limiting example, with reference to the enclosed Figures.

The decriptions will now be made of the individual processes, separately for making polymeric compounds starting from secondary raw materials made of PFU, EPDM, and butyl rubber.

The above secondary raw materials to be used to arrive at final extruded products start from PFU, EPDM and butyl blisters, shredded using specific criteria for every product aimed for the extruding process, and not using rubbers of the "crumb" type. The features of the above granulated secondary raw materials are verified by mechanical analyses and supported by a TGA check.

In the present description, obtained data are expressed in a range of values such as to comprise all possible variations in order to avoid possible copies.

The extruding process provides for the check of temperature, speed, torque, and pressure to obtain the polymeric compounds made of PFU, EPDM, and butyl rubber, whose mechanical characteristics have been analyzed in a laboratory and obtained data are expressed in a wide range of values.

### A. REGENERATED PFU, OUT OF USE TIRES, EXTRUDED PRODUCT

According to the process of the present invention, it is intended to exploit at a maximum the mechanical characteristics of the used secondary raw materials coming from PFU, out of use tires. The above secondary raw materials to be used to arrive at final extruded products start from shredded PFU using specific criteria for every product to be used in the extrusion process. The characteristics of the above granulated secondary raw materials are verified by mechanical analyses and supported by the check of the TGA. The extrusion process provides for the control of temperature, speed, torque and pressure to obtain the polymeric compounds, whose mechanical characteristics are analyzed in a laboratory and obtained data are expressed in a wide range of values.

According to the present invention, the extrusion plant has the following settings as shown in the following table:

| Manufacturing system: | PFU Settings: | Notes: |
|---|---|---|
| Co-rotating twin screw 150 Kg/h | 17Z - 150 KG/h | |
| T (°C) | 30/192 (Z1/13) | |
| T melt (°C) | 124 - 153 | |
| Granule size (mm) | 2.5 - 7 | |
| 9KW vacuum (mbar) | 700 | |
| N° screw revs | 269 | |
| Torque (Nm) | 678-838 | |
| Torque (%) | 34-41 | |
| TGA/IR: | tq, granule, extruded | |
| Extruder head temperature (°C) | 60-75 | |
| Extruder pressure (mbar) | 6-7 | |

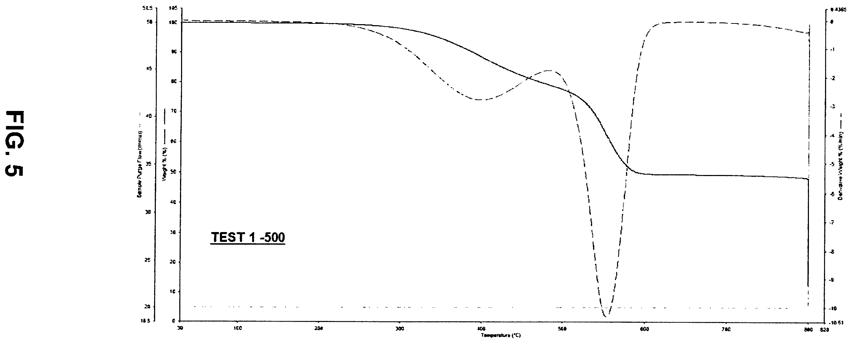

As clearly appears in Figure 5, the measure of the Mooney viscosity on the extruded PFU product has been performed.

From the check of the thermal stability of the PFU extruded product, it appears that the working temperature in the extrusion process has not damaged the chemical features of the end product, namely there are no pyrolysis starting processes.

The technical data of the PFU extruded product as obtained are as follows:

**ML samples 1÷4 100°C**

| **Chemichal properties** | | |
|---|---|---|
| Solubility in acetone % | **ASTM D297-18** | 7 ± 2 |
| Ashes% | **ASTM D297-18** | 4 ± 2 |

| **Physical properties** | | |
|---|---|---|
| Density Kg/m3 | **ASTM D297-15** | 1140 ± 15 |
| Mooney viscosity | **UNI ISO 289-1:2009** | 37.8 ± 5 |
| **Hardening temperature: 10 minutes @ 150 °C** | | |

The below mentioned test results have as reference a technical mixture of recipe adapted for manufacturing the tread of a truck tire.

The examined mixtures in the laboratory tests have been added with the regenerated PFU in the following doses:
Test 1 = 10 parts,
Test 2 = 20 parts, and
Test 3 = 30 parts.

| | **REF:** | **test 1** | **test 2** | **test 3** |
|---|---|---|---|---|
| **NR SVR 3L** | **100.00** | **93.0** | **86.0** | **79.0** |
| **AGR-B.THE.01_B** | | **10.0** | **20.0** | **30.0** |
| **Carbon Black N330** | **55.0** | **52.0** | **49.0** | **46.0** |
| **Plast.Naft.Nytex 832** | **5.0** | **5.0** | **5.0** | **5.0** |
| **Zinc oxide** | **3.5** | **3.5** | **3.5** | **3.5** |
| **Stearic acid** | **2.0** | **2.0** | **2.0** | **2.0** |
| **Vulkanox4020 6PPD** | **2.0** | **2.0** | **2.0** | **2.0** |
| **TMQ** | **1.0** | **1.0** | **1.0** | **1.0** |
| **Micro Wax** | **2.0** | **2.0** | **2.0** | **2.0** |
| **CBS** | **1.0** | **1.0** | **1.0** | **1.0** |
| **DPG 80%** | **0.19** | **0.19** | **0.19** | **0.19** |
| **Sulfur** | **1.8** | **1.8** | **1.8** | **1.8** |
| **Totale PHR** | **173.5** | **173.5** | **173.5** | **173.5** |

**Mixture acceleration at Roll Mill 150 x 300 mm with cylinder temperature 30°C and Batch Factor 3,0 Mooney viscosity of accelerated mixture: (UNI ISO 289-1:2009)**

| **Sample denomination:** | **REF** | **Test 1 (10%)** | **Test 2 (20%)** | **Test 3 (30%)** |
|---|---|---|---|---|
| **ML1÷4 100°C** | **31.3** | **32.4** | **31.3** | **28.9** |

**MDR vulcanization graph with oscillating camera ±0.5° 100 cycles/min 1.7 Hz (ISO 6502 Method, figure 5:2009)**

| **Sample denomination:** | **REF** | **Test 1 (10%)** | **Test 2 (20%)** | **Test 3 (30%)** |
|---|---|---|---|---|
| **Conditions 150°C** | **30¹** | **30¹** | **30¹** | **30¹** |
| **ML lb.in** | **1.13** | **1.18** | **1.41** | **1.29** |
| **MH lb.in** | **17.06** | **12.93** | **15.43** | **14.37** |
| **ts1 min:cent** | **2.66** | **2.68** | **2.24** | **2.33** |
| **ts2 min:cent** | **2.96** | **297** | **2.47** | **2.60** |
| **t50 min:cent** | **4.17** | **4.05** | **3.44** | **3.93** |
| **t 90 min:cent** | **8.23** | **6.87** | **6.18** | **8.05** |
| **Tand** | **0.088** | **0.121** | **0.119** | **0.103** |

**Vulcanization conditions 150°C: 200x200x2 plaque (ISO Method 2393:2008)**

| **Sample denomination:** | **REF** | **Test 1 (10%)** | **Test 2 (20%)** | **Test 3 (30%)** |
|---|---|---|---|---|
| **Time:** | **18¹** | **10¹** | **10¹** | **10¹** |

**Traction As Such (ISO Method 37:2011 Type 1)**

| **Sample denomination:** | **REF** | **Test 1 (10%)** | **Test 2 (20%)** | **Test 3 (30%)** |
|---|---|---|---|---|
| **M 100% Mpa** | **2.7** | **2.7** | **2.7** | **2.7** |
| **M 200% Mpa** | **7.0** | **6.7** | **6.8** | **6.4** |
| **M 300% Mpa** | **12.4** | **11.7** | **11.6** | **10.9** |
| **C.R. Mpa** | **24.4** | **21.1** | **20.4** | **18.3** |
| **A.R. %** | **562** | **499** | **502** | **479** |

**Trouser laceration (UNI ISO Method 1A:2006)**

| **Sample denomination:** | **REF** | **Test 1 (10%)** | **Test 2 (20%)** | **Test 3 (30%)** |
|---|---|---|---|---|
| **N/mm** | **11.8** | **20.6** | **17.6** | **21.5** |

**Shore A Hardness (UNI ISO Method 7619:2011)**

| **Sample denomination:** | **REF** | **Test 1 (10%)** | **Test 2 (20%)** | **Test 3 (30%)** |
|---|---|---|---|---|
| **Shore A³** | **66.4** | **66.1** | **66.2** | **66.5** |

| **Test 1/2/3** | | **Result** | **Standard** |
|---|---|---|---|
| **Chemical tests** | **PAH analysis according to EU 1272/2013 regulations in regenerated products made of natural rubber** | **Benzo(a)pyrene: 0.68 mg/kg Limit: <1 mg/kg COMPLIANT** | **Reg. 1907 - - All. XVII - - Entry 50** |
| | | **Sum 8 IPA: 2.97 mg/kg Limit: <10 mg/kg COMPLIANT** | |

### B. EXTRUDED PRODUCT MADE OF REGENERATED EPDM

It is intended to exploit at a maximum the mechanical characteristics of the used secondary raw materials coming from EPDM gaskets. The above secondary raw materials to be used to arrive at the final extruded products are obtained from shredded EPDM using specific criteria for every product to be used in the extrusion process.

The characteristics of the above granulated secondary raw materials are verified by mechanical analyses and supported by a check of the TGA. The obtained data are expressed herein below in a range of values.

The extrusion process provides for a control of temperature, speed, torque, and pressure to obtain the polymeric compounds, whose mechanical features have been verified through a laboratory analysis, and obtained data have been expressed in a wide range of values.

As shown, the IR spectral comparison is provided between floating and not floating rubber samples with respect to an ATR made of germanium.

The samples defined as floating and not floating have different specific weights for the different percentage of inert charge present in the mixture.

According to the present invention, the extrusion plant has the following settings as shown in the following table:

| **Production system:** | **EPDM Settings:** | **Note:** |
|---|---|---|
| **co-rotating twin screw 150 Kg/h:** | **17Z - 150 Kg/h** | |
| **T (°C)** | **50-325 (Z1/13)** | |
| **T melt (°C)** | **149 - 185** | |
| **Granule size (mm)** | **2.5 - 7** | |
| **9KW vacuum (mbar)** | **700** | |
| **N° screw revs** | **199** | |
| **Torque (Nm)** | **678 - 878** | |
| **Torque (%)** | **34 - 41** | |
| **TGA/IR** | **Tq,granule,extruded** | |
| **T extruder head (°C)** | **84-97** | |
| **Extruder pressure (mbar)** | **6-7 mbar** | |

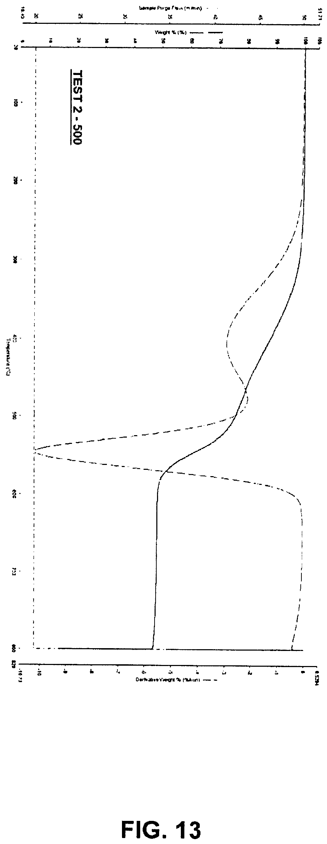

As it is possible to see in Figure 13, the working temperatures in the extrusion process have not damaged the chemical features of the end product, namely there are no pyrolysis starting processes.

As regards the technical data related to the thereby obtained and produced extruded product, herein below tests results are provided, which have as reference a technical mixture of recipe adapted for manufacturing automotive gaskets.

The mixtures examined in the laboratory tests have been added with the regenerated product from automotive EPDM gaskets in a dosage of 20 parts.

**Chemical properties**

| EPDM TEST | | | | |
|---|---|---|---|---|
| Test | ISO 9924-1 | Udm | Result | Standard |
| TGA thermal-gravimetric analysis | | % | TGA | ISO 9924-1 |
| | | | - total organic: 49.53%; | |
| | | | -CO₂: 3.53% | |
| | | | - Carb. black: 38.87% | |
| | | | - Ashes at 900°C: 8.07% | |
| Chemical tests | Sulfur % determination | % | Total sulfur: 0.79% | ASTM D4236-12 |

**Reference = internal mixture with recipe for rubber gaskets:**

| | **REF** | **test 1 (20%)** |
|---|---|---|
| **DUTRAL TER 4044** | **100.00** | **93.0** |
| **Carbon Black N650** | **155.0** | **149.0** |
| **AGR.B.THE.-02** | | **20.0** |
| **NYPAR 330** | **115.0** | **115.0** |
| **Zinc oxide** | **5.0** | **5.0** |
| **Stearic acid** | **1.0** | **1.0** |
| **MICRO WAX** | **5.0** | **5.0** |
| **MBTS** | **1.3** | **1.3** |
| **TMTD 80** | **0.8** | **0.8** |
| **ZDBC** | **2.0** | **2.0** |
| **Sulfur** | **1,.5** | **1.5** |
| **TOTAL PHR** | **386.6** | **386.6** |

**Mixture package at Roll Mill 150 x 300 mm Cylinder temperature 30°C, Batch Factor 3.0 Mooney viscosity for accelerated mixture (UNI ISO 289-1:2009)**

| **Sample denomination:** | **REF** | **Test 1 (20%)** |
|---|---|---|
| **ML1÷4 100°C** | **13.7** | **13.4** |

**MDR vulcanization graph with oscillating chamber ±0.5° 100 cycles/min 1.7 Hz : (ISO 6502 Method figure 5:2009)**

| **Sample denomination:** | **REF** | **Test 1 20%** |
|---|---|---|
| **Contizions 180°C** | **30¹** | **30¹** |
| **ML Ib.in** | **0.31** | **0.48** |
| **MH Ib.in** | **2.58** | **6.65** |
| **ts1 min:cent** | **2.14** | **0.75** |
| **ts2 min:cent** | **3.81** | **0.91** |
| **t50 min:cent** | **2.25** | **1.05** |
| **t 90 min:cent** | **4.04** | **1.70** |
| **Tand** | **0.373** | **0.345** |

**Vulcanization conditions 180°C: 200x200x2 plaque (ISO Method 2393:2008)**

| **Sample denomination:** | **REF** | **Test 1 (20%)** |
|---|---|---|
| **Time:** | **5¹** | **5¹** |

**Traction As Such (ISO Method 37:2011 Type 1)**

| **Sample denomination:** | **REF** | **Test 1 (10%)** |
|---|---|---|
| **M 100% Mpa** | **1.9** | **1.4** |
| **M 200% Mpa** | **3.9** | **2.9** |
| **M 300% Mpa** | **5.5** | **4.1** |
| **C.R. Mpa** | **6.2** | **5.5** |
| **A.R. %** | **354** | **393** |

**Shore A Hardness (UNI ISO Method 7619:2011)**

| **Sample denomination:** | **REF** | **Test 1 20%** |
|---|---|---|
| **Shore A³** | **56.1** | **49.0** |

**Determination of the contents of Aromatic Polycyclic Hydrocarbons (IPA) in regenerated EPDM material: (according to EU 1272:2013 Method)**

| | **mg/kg** | **Limit mg/kg** |
|---|---|---|
| **Benzo(a)pyrene** | **<0.2** | **≤1** |
| **Sum 8 PAH** | **<0.2** | **≤10** |

### C. EXTRUDED PRODUCT MADE OF REGENERATED BUTYL RUBBER

It is intended to exploit at a maximum the mechanical characteristics of used secondary raw materials coming from butyl blisters.

The above secondary raw materials are used to arrive at the final extruded products, shredded butyl blisters using specific anti-packaging criteria for every batch to be used in the extrusion process.

The characteristics of the above granulated secondary raw materials are verified by mechanical analyses and supported by a check of the TGA. Data related to the extrusion process are expressed herein below in a range of values.

The extrusion process provides for a control of temperature, speed, torque, and pressure to obtain the polymeric compounds whose mechanical and chemical characteristics allow being re-used till over 50% in the basic mixtures to obtain manufactured products made of butyl rubber.

The extrusion plant for performing the process for this material (butyl rubber) has the following settings as shown in the following Table:

| **Production system** | **Butyl rubber Settings:** | **Notes:** |
|---|---|---|
| **Co-rotating twin screw 150 Kg/h** | **17Z - 15 Kg/h** | |
| **T(°C)** | **60-291 (Z1/Z13)** | |
| **T melt (°C)** | **109-121** | |
| **Granule size (mm)** | **2.5** | |
| **9KW vacuum (mbar)** | **700** | |
| **N° screw revs** | **298** | |
| **Torque (Nm)** | **129-143** | |
| **Torque (%)** | **44-49** | |
| **TGA:** | **Tq,granule,extruded** | |
| **T extruder head (°C)** | **70-75** | |
| **Extruder pressure:** | **6-7 mbar** | |

A process is described for making polymeric compounds for mixtures aimed to produce technical rubber items, wherein such polymeric compounds are obtained starting from secondary raw materials chosen from the group comprising PFU, out of use tires, EPDM and butyl rubbers, such process comprising the following steps:
- shredding the secondary raw materials with granulometry included between 2.5 and 7 mm, excluding materials of the crumb type;
- extruding with the following parameters: extruder head temperature included between 60 and 100 °C, vacuum equal to 700 mbar, number of screw revolutions included between 190 and 300, torque included between 120 and 890 Nm and pressure extruder included between 6 and 7 mbar.

In particular, the process through which the polymeric compound is obtained from shredding a PFU with final granulometry included between 2.5 and 7 mm provides that the extruding step occurs with the following parameters: melting temperature included between 124 and 153 °C, extruder head temperature included between 60 and 75 °C, vacuum equal to 700 mbar, number of screw revolutions 269 and torque included between 678 and 838 Nm.

The process according to what is described above wherein the polymeric compound is obtained from the shredding of EPDM with final granulometry included between 2.5 and 7 mm provides that the extruding step occurs with the following parameters: melting temperature included between 149 and 185 °C, extruder head temperature included between 84 and 97 °C, vacuum equal to 700 mbar, number of screw revolutions 199 and torque included between 678 and 878 Nm.

The process through which the polymeric compound is obtained from the shredding of butyl rubber with final granulometry of 2.5 mm provides that the extruding step occurs with the following parameters: melting temperature included between 109 and 121 °C, extruder head temperature included between 70 and 75 °C, vacuum equal to 700 mbar, number of screw revolutions 298 and torque included between 129 and 143 Nm.

For the extruding step, the extruder pressure is obtained by using as extruder a co-rotating twin screw, which helps obtaining a low value of extruder pressure till 10000 times the one of conventional extrusion pressures.

Moreover, to obtain the objects of the invention, the extruder is composed of a screw with a number of rectilinear sections from 16 to 24, each one of such sections being approximately 30 cm long. This allows obtaining a rectilinear extruder with a very long screw, from about 480 cm to about 720 cm, which performs such an extrusion as to wholly obtain the objects of the invention.

## Claims

1. Process for making polymeric compounds for mixtures aimed to produce technical rubber items, wherein said polymeric compounds are obtained starting from secondary raw materials chosen from the group comprising PFU, namely out of use tires, EPDM, and butyl rubbers, said process comprising the following steps:
- shredding the secondary raw materials with granulometry included between 2.5 and 7 mm, without including crumb;
- extruding with the following parameters: extruder head temperature included between 60 and 100 °C, vacuum equal to 700 mbar, number of screw revolutions included between 190 and 300, torque included between 120 and 890 Nm and extruder pressure included between 6 and 7 mbar,
wherein the extruder pressure is obtained by using as extruder a co-rotating twin screw, said extruder being composed of a number of rectilinear sections from 16 to 24, each one of said sections being approximately 30 cm long, said co-rotating twin screw being from about 480 cm to about 720 cm long.

2. Process according to the previous claim, **characterized in that** said polymeric compound is obtained from the shredding of PFU with final granulometry included between 2.5 and 7 mm, and wherein the extruding step occurs with the following parameters: melting temperature included between 124 and 153 °C, extruder head temperature included between 60 and 75 °C, vacuum equal to 700 mbar, number of screw revolutions 269 and torque included between 678 and 838 Nm.

3. Process according to any one of the previous claims, **characterized in that** said polymeric compound is obtained from the shredding of EPDM with final granulometry included between 2.5 and 7 mm, and wherein the extruding step occurs with the following parameters: melting temperature included between 149 and 185 °C, extruder head temperature included between 84 and 97 °C, vacuum equal to 700 mbar, number of screw revolutions 199 and torque included between 678 and 878 Nm.

4. Process according to any one of the previous claims, **characterized in that** said polymeric compound is obtained from the shredding of butyl rubber with final granulometry of 2.5 mm, and wherein the extruding step occurs with the following parameters: melting temperature included between 109 and 121 °C, extruder head temperature included between 70 and 75 °C, vacuum equal to 700 mbar, number of screw revolutions 298 and torque included between 129 and 143 Nm.

## Patentansprüche

1. Verfahren für die Herstellung von Kunststoffmischungen, die für die Herstellung von technischen Gummiartikeln bestimmt sind, wobei die Kunststoffmischungen aus Primär- und Sekundärrohstoffen erhalten werden, die in der Gruppe der Altreifen, EPDM, und Butylkautschuke enthalten sind, das genannte Verfahren umfasst die folgenden Phasen:
- Zerkleinerung der Primär- und Sekundärrohstoffe mit Korngröße zwischen 2,5 und 7 mm, ohne Einschluss von Pulver;
- Extrusion mit den folgenden Parametern: Temperatur des Extruderkopfes zwischen 60 und 100 °C, Vakuum 700mbar, Schraubendrehzahl zwischen 190 und 300, Drehmoment zwischen 120 und 890 Nm und Extruderdruck zwischen 6 und 7 mbar,
wobei der Extruderdruck erhalten wird, indem eine gleichläufige Doppelschnecke als Extruder verwendet wird, der genannte Extruder besteht aus einer bestimmten Anzahl von geradlinigen Abschnitten von 16 bis 24, jeder der genannten Abschnitte ist ca. 30 cm lang, die genannte gleichläufige Doppelschnecke ist von ca. 480 bis ca. 720 cm lang.

2. Verfahren gemäß dem vorhergehenden Patentanspruch, das **dadurch gekennzeichnet ist, dass** die genannte Kunststoffmischung durch die Zerkleinerung von Altreifen mit Endkorngröße zwischen 2,5 und 7 mm erhalten wird und wobei die Extrusionsphase mit den folgenden Parametern erfolgt: Schmelztemperatur zwischen 124 und 153 °C, Temperatur des Extruderkopfes zwischen 60 und 75 °C, Vakuum 700 mbar, Schraubendrehzahl 269 und Drehmoment zwischen 678 und 838 Nm.

3. Verfahren gemäß einem beliebigen der vorhergehenden Patentansprüche, das **dadurch gekennzeichnet ist, dass** die genannte Kunststoffmischung durch die Zerkleinerung von EPDM mit Endkorngröße zwischen 2,5 und 7 mm erhalten wird und wobei die Extrusionsphase mit den folgenden Parametern erfolgt: Schmelztemperatur zwischen 149 und 185 °C, Temperatur des Extruderkopfes zwischen 84 und 97 °C, Vakuum 700 mbar, Schraubendrehzahl 199 und Drehmoment zwischen 678 und 878 Nm.

4. Verfahren gemäß einem beliebigen der vorhergehenden Patentansprüche, das **dadurch gekennzeichnet ist, dass** die genannte Kunststoffmischung durch die Zerkleinerung von Butylkautschuk mit Endkorngröße von 2,5 mm erhalten wird und wobei die Extrusionsphase mit den folgenden Parametern erfolgt: Schmelztemperatur zwischen 109 und 121 °C, Temperatur des Extruderkopfes zwischen 70 und 75 °C, Vakuum 700 mbar, Schraubendrehzahl 298 und Drehmoment zwischen 129 und 143 Nm.

## Revendications

1. Procédure pour réaliser des composés polymères pour des mélanges destinés à la production d'articles techniques en caoutchouc où ces composés polymères sont obtenus à partir de matières premières secondaires choisies dans le groupe comprenant des PFU (pneus hors usage), des caoutchoucs EPDM et des caoutchoucs butyles ; la procédure comprend les phases suivantes :
- broyage des matières premières secondaires avec une granulométrie comprise entre 2,5 et 7 mm, sans pulvérin ;
- extrusion réalisée avec les paramètres suivants : température de la tête d'extrusion comprise entre 60 et 100 °C, vide de l'ordre de 700 mbars, nombre de tours de la vis compris entre 190 et 300, couple de serrage compris entre 120 et 890 Nm, pression d'extrusion comprise entre 6 et 7 mbars,
où la pression d'extrusion est obtenue en utilisant une double vis co-rotative comme extrudeuse ; cette dernière est composée d'un certain nombre de sections rectilignes (de 16 à 24) ; chaque section a une longueur de 30 cm environ, la double vis co-rotative possède une longueur comprise entre 480 cm et 720 cm environ.

2. Procédure selon la revendication précédente **caractérisée en ce que** le mélange polymère est obtenu à travers le broyage de PFU avec une granulométrie finale comprise entre 2,5 et 7 mm ; la phase d'extrusion est réalisée avec les paramètres suivants : température de fusion comprise entre 124 et 153 °C, température de la tête d'extrusion comprise entre 60 et 75 °C, vide de l'ordre de 700 mbars, nombre de tours de la vis 269, couple de serrage compris entre 678 et 838 Nm.

3. Procédure selon l'une des revendications précédentes **caractérisée en ce que** le mélange polymère est obtenu à travers le broyage de caoutchoucs EPDM avec une granulométrie finale comprise entre 2,5 et 7 mm ; la phase d'extrusion est réalisée avec les paramètres suivants : température de fusion comprise entre 149 et 185 °C, température de la tête d'extrusion comprise entre 84 et 97 °C, vide de l'ordre de 700 mbars, nombre de tours de la vis 199, couple de serrage compris entre 678 et 878 Nm.

4. Procédure selon l'une des revendications précédentes **caractérisée en ce que** le mélange polymère est obtenu à travers le broyage de caoutchoucs butyles avec une granulométrie finale de 2,5 mm ; la phase d'extrusion est réalisée avec les paramètres suivants : température de fusion comprise entre 109 et 121 °C, température de la tête d'extrusion comprise entre 70 et 75 °C, vide de l'ordre de 700 mbars, nombre de tours de la vis 298, couple de serrage compris entre 129 et 143 Nm.
